Europäisches Patentamt

European Patent Office

Office européen des brevets

(19)

(11) Veröffentlichungsnummer : **0 071 841**
**B1**

(12) **EUROPÄISCHE PATENTSCHRIFT**

(45) Veröffentlichungstag der Patentschrift :
01.10.86

(51) Int. Cl.⁴ : **A 21·D 13/02**, A 21 D   2/18

(21) Anmeldenummer : 82106667.7

(22) Anmeldetag : 23.07.82

(54) Verfahren und Fertigmehl zum Herstellen von schnittfestem Brot mit erhöhtem Ballaststoffgehalt.

(30) Priorität : 07.08.81 DE 3131432

(43) Veröffentlichungstag der Anmeldung :
16.02.83 Patentblatt 83/07

(45) Bekanntmachung des Hinweises auf die Patenterteilung : 01.10.86 Patentblatt 86/40

(84) Benannte Vertragsstaaten :
AT CH DE FR GB IT LI SE

(56) Entgegenhaltungen :
DE-A- 2 346 921
DE-A- 2 933 521
GB-A-   436 028
GB-A- 1 422 345
GB-A- 2 010 656

(73) Patentinhaber : Schoberth, Hans
D-8581 Harsdorf Nr. 9 (DE)

(72) Erfinder : Schoberth, Hans
D-8581 Harsdorf Nr. 9 (DE)

(74) Vertreter : Tergau, Enno et al
Hefnersplatz 3 Postfach 11 93 47
D-8500 Nürnberg 11 (DE)

## Beschreibung .

Die Erfindung betrifft ein Verfahren zum Herstellen von schnittfestem Brot mit hohem Ballaststoffgehalt, bei dem aus Brotgetreidemehl unter Zusatz von Wasser, Treib- und/oder Säuerungsmittel und gegebenenfalls weiteren Hilfsstoffen ein Teig bereitet und dieser nach Formung und Garung zu Brot verbacken wird. Die Erfindung betrifft des weiteren ein lagerfähiges Fertigmehlgemisch, welches zur Ausführung dieses Verfahrens geeignet ist.

Es ist bekannt, daß der Ballaststoffgehalt der menschlichen Nahrung im allgemeinen zu niedrig ist. Unter « Ballaststoffen » werden dabei sämtliche von den Verdauungssäften des menschlichen Körpers nicht angreifbaren organischen Bestandteile der Nahrung verstanden. Im allgemeinen handelt es sich um pflanzliche Nahrungsteile, welche chemisch im wesentlichen aus Zellulose, Hemizellulose, Pektin und/oder Lignin bestehen. Die Wirkung derartiger Ballaststoffe in der Nahrung ist komplex ; sie besteht beispielsweise in der Reizung des Verdauungstraktes zu erhöhter Peristaltik sowie ferner in der Auflockerung des zu verdauenden Nahrungsmittelgemisches, so daß die Verdauungssäfte leichteren Zutritt haben und Diffusionsvorgänge beschleunigt werden.

Es ist bereits versucht worden, den Ballaststoffgehalt der menschlichen Nahrung zu erhöhen. Der Genuß von Vollkornbrot ist ein Beispiel hierfür. Des weiteren ist bereits vorgeschlagen worden (Zeitschrift « Getreide, Mehl und Brot » ; September 1980, Seite 243-247), auch in Broten und Kleingebäck den Ballaststoff weiter anzureichern, insbesondere durch Zusatz von Speisekleie. Speziell genannt ist dort Weizenkleiebrot und Haferkleiebrot (S. 243, rechte Spalte). Derartige Zusätze finden jedoch bei etwa 10 Gew.% (gelegentlich auch 15 Gew.%) ihre Grenze, da höhere Zusätze die Schnittfestigkeit des Brotes sowie auch andere Eigenschaften, wie beispielsweise die Krumenelastizität, sehr verschlechtern.

Aus der Literaturstelle « Brot und Gebäck », 24. Jahrg., Heft 4, S. 63-66, insbesondere S. 64, ist es bekannt, zur Herstellung eines kalorienreduzierten Brotes einen erhöhten Gehalt an Weizenschalen (Weizenkleie) vorzusehen, wobei dieser Gehalt in der Größenordnung von 23-27 % liegt. Dem Brot ist Reisquellmehl in Mengen von 6,7 %, bezogen auf den Mehlanteil, zugesetzt worden. In der Literaturstelle (S. 64, rechte Spalte) ist angegeben, daß durch Quellmehl die Krume des Brotes· schnittfester und besser bestreichbar wird.

Aus der Literaturstelle « Die Mühle + Mischfuttertechnik », 118. Jahrg., 22. Januar 1984, Heft 4, Sn. 47-50 ist es bekannt, Roggenschrotbrot mit 10 % Speisekleiezusatz herzustellen. Des weiteren werden dort Brot und Kleingebäck beschrieben mit einem « Mindestzusatz » von 10 % Speisekleie. Außerdem sind auf S. 49 Kleingebäck mit 10-15 % Speisekleie sowie Hefestuten mit Ballaststoffanreicherungen bis 20 % beschrieben.

Es muß aber hervorgehoben werden, daß es sich bei den dort abgehandelten Broten um Versuchsreihen handelt und daß aus der Zusammenfassung der Literaturstelle auf S. 49 hervorgeht, daß sich Speisekleiezusätze von 10 % in den Rezepturen von Frühstücksgetreide, Brot (Kleingebäck) und feinen Backwaren erarbeiten lassen. Aus alledem folgt, daß Speisekleiezusätze, die 10 % übersteigen, erhebliche praktische Schwierigkeiten mit sich bringen.

In der deutschen Offenlegungsschrift 28 54 728 ist ein Verfahren zur Herstellung einer vorwiegend aus Kleie bestehenden Backware beschrieben. Dem Kleie-Wasser-Gemisch werden dabei 2,5 bis 15 Gewichtsteile eines pflanzlichen Verdickungsmittels, insbesondere von Johannisbrotkernmehl zugegeben. Das erhaltene Produkt ist kein Brot im eigentlichen Sinne, sondern eine Kleinbackware, welche vorwiegend aus Kleie besteht. Die Backware ist nicht schneidbar und schnittfest und sie soll nach den Vorschlägen der Patentanmeldung vorzugsweise als Knabbergebäck dienen.

In der deutschen Offenlegungsschrift 29 33 521 ist ein Verfahren zur Herstellung eines Kleieproduktes in u. a.-gebackener Form beschrieben, welches dadurch gekennzeichnet ist, daß die Zubereitung kalt-quellfähige Gleitstoffe enthält. Als Gleitstoffe werden Traganth, Alginate, Agar-Agar, Johannisbrotkernmehl, Zellulosederivate, kaltquellende Stärke und deren Derivate sowie auch noch weitere Stoffe erwähnt. Zweck dieser Gleitstoffe ist es, die Kleie zu umhüllen und sie dadurch angenehmer essbar zu machen, ihr insbesondere den rauhen, schaligen und spelzigen Geschmack zu nehmen. Auch ist das als « essbare Kleiezubereitung » bezeichnete ballaststofffreiche Nahrungsmittel kein Brot ; es entbehrt insbesondere der Schnittfestigkeit, der Krumenbildung sowie des typischen Brotgeschmackes.

Schließlich ist in der britischen Patentschrift 1 507 867 ein essbares Kleieerzeugnis beschrieben, dessen Gehalt an Phytinsäure durch Abbinden an Kalzium-, Magnesium-, Zink- oder Eisenionen in eine wasserunlösliche Form überführt worden ist. Das Produkt kann in Pulverform, aber auch in Brotform hergestellt werden, wobei insbesondere Kalziumphosphat oder Kalziumsulfat als Phytinsäure-Bindemittel eingesetzt wird. Auch bei diesem Produkt handelt es sich im wesentlichen um ein pharmazeutisches Diätetikum, obgleich in der Beschreibung auch angegeben ist, daß das Mittel in Brotform erzeugt werden kann.

Der Erfindung liegt die Aufgabe zugrunde, die bekannten ballaststoffangereicherten Brote weiterzuentwickeln mit dem Ziel, ein verbessertes Brot mit höherer Bekömmlichkeit, Schmackhaftigkeit sowie mit verbesserter verdauungsfördernder Wirkung anzugeben. Die Lösung dieser Aufgabe ergibt sich aus dem Patentanspruch 1 ; vorteilhafte Weiterentwicklungen sind in den nachfolgenden Patentansprüchen 2-3 angegeben.

Die Erfindung wird im folgenden an einem Beispiel erläutert :

100 Gewichtsteile eines Mehles der unten angegebenen Zusammensetzung werden mit 80 Gewichtsteilen Wasser zu einem Teig verknetet und dabei etwa 2,5-3 % Hefe zugegeben. Die Wassertemperatur wird so gewählt, daß der fertige Teig eine Temperatur von 25 °C bis 29 °C hat.

Zusammensetzung des Mehles :

12 Gew.% Sojakleie,
12 Gew.% Weizenkleie,
3 Gew.% Quellmehl,
35 Gew.% Weizenmehl,
35 Gew.% Roggenmehl,
2 Gew.% Kochsalz,
1 Gew.% organische Speisesäure (beispielsweise Milchsäure, Weinsäure, Zitronensäure o. dgl.).

Nach gründlichem Durchkneten wird eine Teigruhe von 30 bis 40 Minuten eingeschaltet. Danach wird der Teig wie üblich aufgemacht, also zu Broten geformt. Die Teigstücke werden zweckmäßigerweise in Backkästen der Stückgare bei etwa 30 °C überlassen.

Nach Abschluß der Gare wird das Brot bei 280 °C mit fallender Temperatur ausgebacken. Hierbei wird so vorgegangen, daß die Brote in einen auf 280 °C vorgeheizten Ofen geschoben werden und die Ofenraumtemperatur nach etwa 10 Minuten Anbackzeit langsam abgesenkt wird.

Nach Abkühlen liegt ein einwandfrei durchgebackenes leicht schneidbares Brot vor, welches in Scheiben geschnitten normale Brotkonsistenz aufweist und streichfest ist.

## Patentansprüche

1. Verwendung von Quellmehl in Anteilen von 2-8 Gew.% zur Erhöhung der Schnittfestigkeit von Brot, das aus Brotgetreidemehl unter Zusatz von Wasser, Treib- und/oder Säuerungsmitteln und gegebenenfalls weiteren Hilfsstoffen unter Bereitung eines Teiges, Formung, Garung und Backen desselben hergestellt worden ist und wobei dem Ausgangsmehl 10-30 Gew.% Sojakleie zugesetzt worden ist.

2. Lagerfähiges Fertigmehl zur Verwendung nach Anspruch 1, gekennzeichnet durch folgende Zusammensetzung : 10 bis 30 Gew.% Sojakleie, 2 bis 8 Gew.% Quellmehl, Rest Brotgetreidemehl mit den üblichen Zusätzen an Salz, Treib- und/oder Säuerungsmitteln sowie gegebenenfalls Gewürzen.

3. Lagerfähiges Fertigmehlgemisch nach Anspruch 2, gekennzeichnet durch folgende Zusammensetzung : 20 bis 25 Gew.% Sojakleie, 4 bis 5 Gew.% Quellmehl, Rest Brotgetreidemehl mit den üblichen Zusätzen an Salz, Treib- und/oder Säuerungsmitteln sowie gegebenenfalls Gewürzen.

## Claims

1. Use of pregelatinized flour in proportions of 2-8 % by weight for improving the suitability for slicing of bread which has been prepared from bread cereal flour with the addition of water, raising and/or sour dough ingredients and, if appropriate, further auxiliaries with preparation of a dough, moulding, fermentation and baking thereof, and 10-30 % by weight of soya bran having been added to the starting flour.

2. Storable ready-to-use flour for use according to Claim 1, characterized by the following composition : 10 to 30 % by weight of soya bran, 2 to 8 % by weight of pregelatinized flour, the remainder being bread cereal flour, with the usual additions of salt, raising and/or sour dough ingredients and, if appropriate, spices.

3. Storable ready-to-use flour mixture according to Claim 2, characterized by the following composition : 20 to 25 % by weight of soya bran, 4 to 5 % by weight of pregelatinized flour, the remainder being bread cereal flour, with the usual additions of salt, raising and/or sour dough ingredients and, if appropriate, spices.

## Revendications

1. Utilisation d'une farine gonflable en proportion de 2 à 8 % en poids pour l'amélioration de la résistance à la coupe du pain qui a été préparé à partir d'une farine de céréales panifiable avec adjonction d'eau, de levures et/ou d'agents acidifiants et, le cas échéant, d'autres produits auxiliaires avec préparation d'une pâte, formage, fermentation et cuisson de cette pâte, dans laquelle on a ajouté à la farine de départ de 10 à 30 % en poids de son de soja.

2. Farine prête à l'emploi, apte à la conservation, pour l'utilisation selon la revendication 1, caractérisée par la composition suivante : 10 à 30 % en poids de son de soja, 2 à 8 % en poids de farine gonflable, le solde consistant en farine de céréales panifiable avec les adjonctions usuelles de sel, de levures et/ou d'agents acidifiants et, le cas échéant, d'épices.

3. Farine mélangée prête à l'emploi, apte à la conservation, selon la revendication 2, caractérisée par la composition suivante : 20 à 25 % en poids de son de soja, 4 à 5 % en poids de farine gonflable, le solde consistant en farine de céréales panifiable avec les adjonctions habituelles de sel, de levures et/ou d'agents acidifiants et, le cas échéant, d'épices.